# FASCICULE DE BREVET EUROPEEN

(11) **EP 0 559 584 B1**
(45) Date de publication et mention de la délivrance du brevet: **03.07.1996**
(21) Numéro de dépôt: 93420088.2
(22) Date de dépôt: 25.02.1993
(51) Int. Cl.: A01J 25/13

(54) **Bloc-moule pour la fabrication de fromages**
Formblock zur Herstellung von Käsen
Mould block for the manufacturing of cheeses

(30) Priorité: 03.03.1992 FR 9202758
(43) Date de publication de la demande: 08.09.1993
(73) Titulaire: CHALON MEGARD, F-01460 Montreal la Cluse (FR)
(72) Inventeur: Megard, Pierre, F-01130 Nantua (FR)
(74) Mandataire: Bratel, Gérard

(56) Documents cités:
- EP-A- 0 235 675
- FR-A- 2 429 555
- FR-A- 2 491 291
- FR-A- 2 583 611
- FR-A- 2 599 216

## Description

La présente invention concerne un bloc-moule pour la fabrication de fromages, ce bloc-moule intervenant plus particulièrement au cours des opérations de moulage et d'égouttage dans la fabrication de fromages à pâtes molles et/ou à pâtes persillées et/ou à pâtes pressées.

Pour ce genre de fabrications, on connaît déjà des blocs-moules à fond en une pièce, permettant de former des piles de blocs-moules retournables. La caractéristique principale de ces blocs-moules est d'avoir un écoulement du sérum par des fentes ou des trous ménagés sur des parois verticales et sur le pourtour du fond, tandis que l'essentiel du fond reste plein et est simplement rainuré, l'écoulement du sérum du fond se faisant donc latéralement. De cette façon, dans un empilage de blocs-moules, l'écoulement du sérum se fait uniquement sur la périphérie des moules et, de ce fait, le sérum ne risque pas de passer d'un fromage en fabrication vers un autre fromage situé à un niveau inférieur. On connaît encore des blocs-moules analogues, mais à fond en deux pièces, permettant de former des piles de blocs-moules mais aussi d'effectuer des retournements à l'unité. Des blocs-moules de ce genre et correspondant au préambule de la revendication 6 sont connus, entre autres, par les documents FR-A-2429555, FR-A-2583611 et FR-A-2599216.

Ces blocs-moules connus conviennent très bien à la fabrication des fromages de petits diamètres, car l'égouttage de la face inférieure de tels fromages parvient à s'effectuer par les rainures du fond et par l'exsudation latérale du sérum. Par contre, dans le cas de fromages de moyens diamètres ou de grands diamètres, même à partir d'un diamètre de 100 mm, le fait que le fond ne soit pas pourvu de fentes ou de trous est la cause d'un égouttage insuffisant de la face inférieure des fromages. On utilise dans ce cas des ensembles de moulage/égouttage constitués d'un plateau, d'un store d'égouttage fixé ou posé sur le fond du plateau, et d'un bloc-moule constitué par un assemblage de moules cylindriques sans fond. Dans une exécution plus élaborée, on utilise des ensembles constitués par une plaque porteuse supportant d'un côté des moules, munis chacun d'un store sur leur fond, et de l'autre côté des couvercles munis chacun d'un store ou fond, les couvercles étant en correspondance avec les fonds - voir le document FR-A-2491291, qui correspond au préambule de la revendication 1. Une autre réalisation comparable avec stores, comportant des moules sans fond, est indiquée dans le document EP-A-0235675. De telles réalisations sont compliquées, difficiles à utiliser et à nettoyer, en raison de la multiplicité et de la disparité de leurs éléments. De plus, ces réalisations comportent un plateau support d'égouttage unique, commun à tous les moules unitaires, qui est une pièce difficile à réaliser compte tenu de ses formes et dimensions, et la configuration de ce plateau reste contraire à toute conception modulaire.

Le but de la présente invention est de conserver un bloc-moule de réalisation simple, en une ou deux pièces, pour retournement par pile ou pour retournement unitaire et/ou par pile, permettant un égouttage parfait pour tous diamètres de fromages en réalisant un drainage du sérum par le fond, sans recourir à des stores et tout en évitant la chute du sérum d'un fromage sur celui situé au-dessous.

A cet effet, l'invention a essentiellement pour objet un bloc-moule pour la fabrication de fromages selon la revendication 1, constitué par l'assemblage de moules unitaires dans un plan horizontal et étant lui-même empilable avec des blocs-moules identiques, pour former une pile retournable, chaque moule unitaire comprenant une partie supérieure avec une paroi latérale perforée ou ajourée et un fond perforé ou ajouré sur sensiblement toute son étendue, la partie supérieure surmontant un plateau déflecteur plein individuel de forme similaire à celle du fond mais d'une dimension légèrement supérieure, le plateau déflecteur plein surmontant lui-même une partie inférieure symétrique du fond précité, et perforée ou ajourée sur sensiblement toute son étendue, dont le bord est prévu pour s'emboîter au sommet de la partie supérieure du moule unitaire appartenant à un bloc-moule identique inférieur.

Selon une forme de réalisation préférée de l'invention, le plateau déflecteur plein individuel possède une face supérieure et une face inférieure avec des pentes opposées, partant d'un point central et s'étendant vers la périphérie de ce plateau déflecteur.

La structure de bloc-moule proposée par l'invention permet ainsi un écoulement direct du sérum par le fond de chaque moule unitaire, donc un drainage parfait de la face inférieure de chaque fromage quelle que soit sa surface, tandis que le plateau déflecteur plein, associé individuellement à chaque moule unitaire, assure pour ce moule l'évacuation du sérum en évitant que celui-ci ne retombe sur le fromage situé au-dessous, les pentes opposées de ce plateau déflecteur permettant un écoulement correct du sérum vers la périphérie, avant et après retournement de la pile de blocs-moules.

Selon un mode de réalisation il est prévu que, dans chaque moule unitaire, la partie supérieure avec paroi latérale et fond perforés ou ajourés, le plateau déflecteur plein et la partie inférieure perforée ou ajourée sont solidarisés de façon permanente, notamment par l'intermédiaire de plots assemblés par soudure.

Selon un autre mode de réalisation, chaque moule unitaire est formé de deux éléments séparés et superposables, avec un élément supérieur correspondant à la paroi latérale perforée ou ajourée de ce moule unitaire, et un élément inférieur comprenant le fond perforé ou ajouré précité, le plateau déflecteur plein et la partie perforée ou ajourée symétrique dudit fond, des moyens d'assemblage étant prévus pour réunir une pluralité d'éléments supérieurs, et d'autres moyens d'assemblage étant prévus pour réunir plusieurs éléments inférieurs correspondants.

L'invention a aussi pour objet, en tant que tel, un moule unitaire utilisable dans un bloc-moule tel que défini ci-dessus, ou éventuellement utilisable individuellement selon la revendication 6, ce moule unitaire comprenant une partie supérieure avec une paroi latérale perforée ou ajourée et un fond perforé ou ajouré sur sensiblement toute son étendue, la partie supérieure surmontant un plateau déflecteur plein de forme similaire à celle du fond mais d'une dimension légèrement supérieure, et le plateau déflecteur plein surmontant lui-même une partie inférieure symétrique du fond précité, et perforée ou ajourée sur sensiblement toute son étendue, dont le bord est prévu pour s'emboîter au sommet de la partie supérieure d'un moule unitaire identique disposé au-dessous.

De toute façon, l'invention sera mieux comprise à l'aide de la description qui suit, en référence au dessin schématique annexé représentant, à titre d'exemples non limitatifs, deux formes d'exécution de ce bloc-moule pour la fabrication de fromages :
Figure 1 est une vue en coupe verticale, passant par l'axe d'un moule unitaire appartenant à un bloc-moule conforme à la présente invention ;
Figure 2 est une vue en plan par dessus du bloc-moule complet dont la figure 1 représente l'élément de base ;
Figure 3 est une vue en coupe verticale passant par les axes d'une rangée de moules unitaires du bloc-moule de figure 2 ;
Figure 4 est une vue en coupe passant par l'axe d'un moule unitaire formé de deux éléments séparés, appartenant à un bloc-moule selon une autre forme d'exécution de l'invention ;
Figure 5 est une vue en plan par dessus de la partie supérieure du bloc-moule dont la figure 4 représente l'élément de base ;
Figure 6 est une vue en plan par dessus de la partie inférieure de ce bloc-moule ;
Figure 7 est une vue en coupe verticale passant par les axes d'une rangée de moules unitaires du bloc-moule des figures 5 et 6.

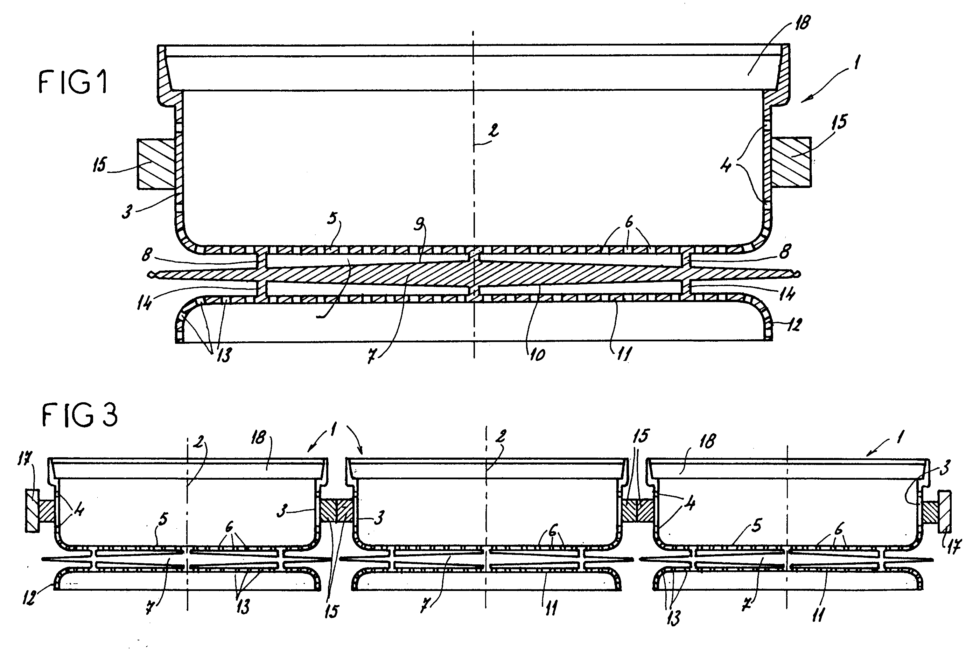

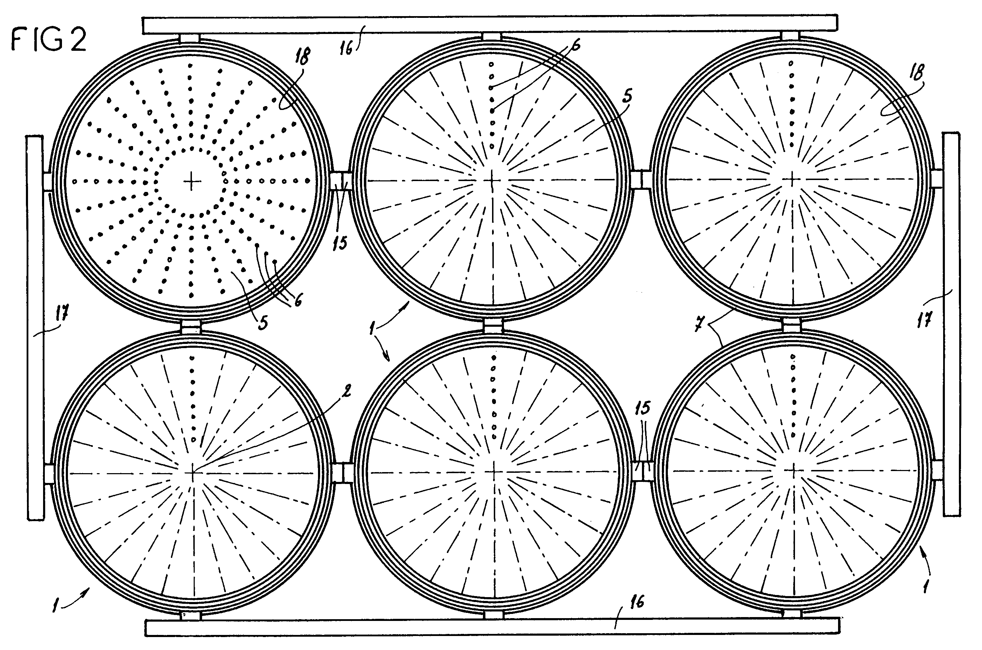

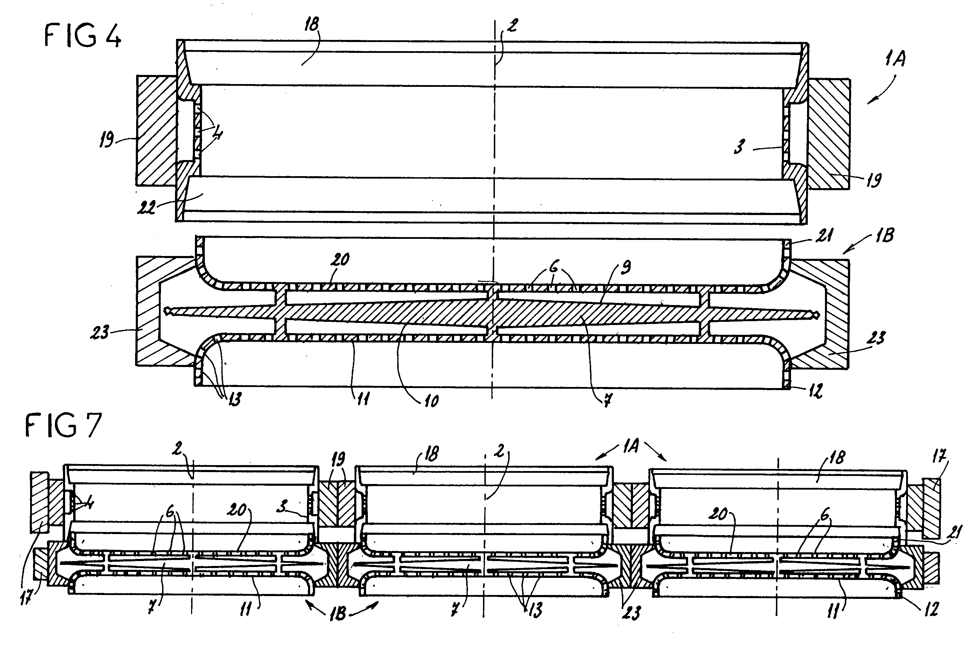

La figure 1 montre un moule unitaire 1, constituant l'élément de base d'un bloc-moule représenté sur les figures 2 et 3.

Le moule unitaire 1 comprend une partie supérieure de forme générale cylindrique, dont l'axe vertical est indiqué en 2. Cette partie supérieure possède une paroi latérale cylindrique 3, dans laquelle sont pratiqués des trous ou des fentes 4, et un fond plat circulaire 5 dans lequel sont ménagés d'autres trous ou fentes 6, répartis sur toute l'étendue du fond 5.

Sous le fond 5 de la partie supérieure est prévu un plateau déflecteur circulaire plein 7, relié à ce fond 5 par des plots 8 de forme générale cylindrique, ménageant un intervalle, qui peuvent être assemblés par soudure entre le fond 5 et le déflecteur 7. Le diamètre du plateau déflecteur 7 est légèrement supérieur à celui de la paroi latérale 3 de la partie supérieure, de manière que le déflecteur 7 présente un léger débordement périphérique par rapport à la partie supérieure du moule unitaire 1. Les faces supérieure 9 et inférieure 10 du plateau déflecteur 7 présentent des inclinaisons sur l'horizontale, faibles et de sens opposés, et forment ainsi des cônes très évasés, dont les sommets se situent sur l'axe 2.

Sous le plateau déflecteur 7, le moule unitaire 1 comporte encore une partie inférieure 11, en forme générale de disque plat symétrique du fond 5, avec un rebord circulaire 12 tourné vers le bas. Des trous ou fentes 13 sont ménagés sur toute l'étendue de la partie inférieure 11. D'autres plots 14, assemblés par soudure, relient la partie inférieure 11 au plateau déflecteur 7, en ménageant un intervalle.

Les moules unitaires 1, réalisés comme décrit ci-dessus, sont assemblés entre eux dans un plan horizontal au moyen de tasseaux d'assemblage 15 prévus à leur périphérie, pour former un bloc-moule complet, comprenant des rangées longitudinales et transversales de moules unitaires 1. Ce bloc-moule complet est lui-même ceinturé par des barrettes d'assemblage longitudinales 16 et transversales 17, destinées à la renforcer et à faciliter sa manutention.

Lorsque plusieurs blocs-moules ainsi réalisés sont empilés, les rebords 12 des parties inférieures des moules unitaires 1 d'un bloc-moule viennent s'emboîter dans des feuillures correspondantes 18, formées au sommet des parties supérieures des moules unitaires 1 du bloc-moule immédiatement inférieur.

En cours d'utilisation, lors de l'égouttage des fromages en cours de fabrication, le sérum excédentaire s'écoule par les trous ou fentes 4 des parois latérales 3, ainsi que par les trous ou fentes 6 des fonds 5 des parties supérieures des moules unitaires 1. Le sérum tombe ainsi sur la face supérieure 9 de chaque plateau déflecteur 7 et, compte tenu de la pente de cette face 9, il parvient à la périphérie du plateau 7, à l'extérieur du contour de la partie supérieure. De là, le sérum tombe verticalement, sans risque de pénétration dans les moules unitaires situés à des niveaux inférieurs. Chaque plateau déflecteur 7 est éventuellement équipé, à sa périphérie, d'un dispositif connu en soi de "goutte d'eau" (non représenté), qui évite tout ruissellement de liquide sur la face inférieure 10 de ce plateau, et garantit que tout le sérum tombe, une fois parvenu à la périphérie dudit plateau.

Le retournement d'une pile de blocs-moules, tels que précédemment décrits, permet de conserver la même configuration d'ensemble et par conséquent le même fonctionnement, les rôles des faces inférieure et supérieure des plateaux déflecteurs 7 étant inversés.

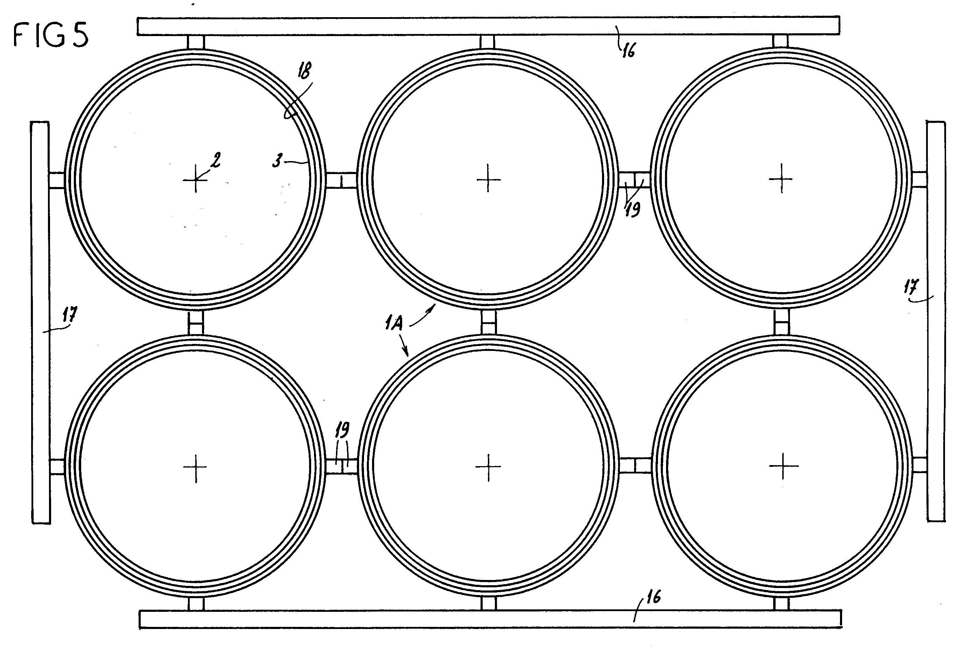

Les figures 4 à 7 représentent une variante de réalisation, dans laquelle chaque moule unitaire est formé de deux éléments séparés et superposables, l'un supérieur désigné 1A et l'autre inférieur désigné 1B, alors que dans la première forme d'exécution, décrite précédemment, les différentes parties de chaque moule unitaire 1 sont solidarisées.

Plus particulièrement, comme le montrent les figures 4 et 5, l'élément supérieur 1A d'un moule unitaire est une réhausse de moulage/égouttage, en forme de virole, correspondant à la seule paroi latérale cylindrique 3 de la première forme d'exécution, et pourvue de la même manière de trous ou fentes 4. Des tasseaux d'assemblage 19 permettent de réunir plusieurs éléments supérieurs 1A pour former la partie supérieure du bloc-moule, montrée sur la figure 5.

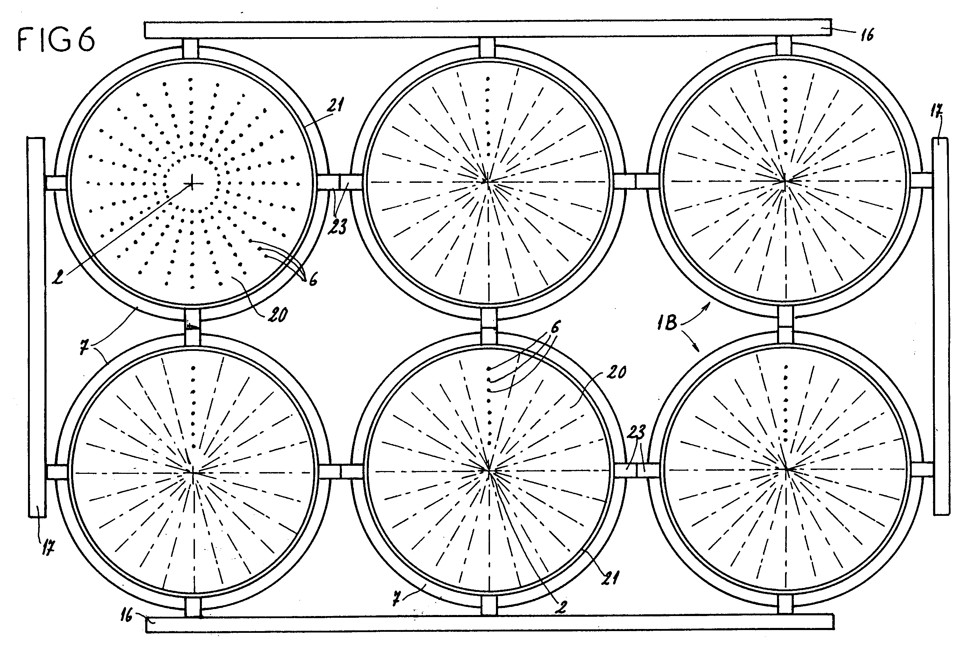

En se référant aux figures 4 et 6, l'élément inférieur 1B d'un moule unitaire comprend, de part et d'autre d'un plateau déflecteur plein 7 réalisé comme décrit précédemment, un disque plat perforé 20 avec un rebord circulaire 21 tourné vers le haut, et un disque plat perforé 11 avec rebord circulaire 12 tourné vers le bas. Le disque supérieur 20 correspond au fond 5 de la première forme d'exécution, et son rebord 21 est prévu pour s'emboîter dans une feuillure 22 formée à la base de l'élément supérieur 1A. Des tasseaux d'assemblage 23 permettent d'assembler plusieurs éléments inférieurs 1B, en correspondance avec la disposition des éléments supérieurs 1A, pour former la partie inférieure du bloc-moule, montrée sur la figure 6, qui peut être renforcée par des barrettes périphériques 16 et 17 comme décrit plus haut.

On notera ici la conformation symétrique, par rapport à un plan horizontal, des éléments supérieurs 1A et des éléments inférieurs 1B. Le diamètre des plateaux déflecteurs 7 est supérieur à celui des éléments supérieurs 1A, de sorte que le principe de fonctionnement précédemment décrit est entièrement conservé. Cette autre forme d'exécution, permettant un retournement en pile et aussi à l'unité, permet d'éviter les défauts dits "casquettes", c'est-à-dire le non-parallélisme des faces inférieure et supérieure d'un fromage, qui peuvent être particulièrement graves dans le cas de fromages de forte section horizontale et de faible épaisseur, en particulier le fromage de Brie.

Comme il va de soi, l'invention ne se limite pas aux seules formes d'exécution de ce bloc-moule pour la fabrication de fromages qui ont été décrites ci-dessus, à titre d'exemples ; elle en embrasse, au contraire, toutes les variantes de réalisation. C'est ainsi, notamment, que l'on ne s'éloignerait pas du cadre de l'invention en destinant le même bloc-moule à des fromages de section horizontale non circulaire, les contours des moules unitaires étant adaptés en conséquence, ou encore en remplaçant les trous ou fentes par tout autre type de perforations ou d'ajours permettant l'écoulement du sérum, telle que des barres du genre "store" ou "paillon", et aussi micro-perforations.

## Revendications

1. Bloc-moule pour la fabrication de fromages, plus particulièrement pour les opérations de moulage et d'égouttage dans la fabrication de fromages à pâtes molles et/ou à pâtes persillées et/ou à pâtes pressées, ce bloc-moule étant constitué par l'assemblage de moules unitaires dans un plan horizontal et étant lui-même empilable avec des blocs-moules identiques, pour former une pile retournable, chaque moule unitaire (1 ; 1A,1B) comprend une partie supérieure avec une paroi latérale (3) et un fond (5 ; 20) perforé ou ajouré sur sensiblement toute son étendue, la partie supérieure surmontant un plateau déflecteur plein (7), le plateau déflecteur plein (7) surmontant lui-même une partie inférieure (11) symétrique du fond précité (5 ; 20) et perforée ou ajourée sur sensiblement toute son étendue, dont le bord (12) est prévu pour s'emboîter au sommet (18) de la partie supérieure du moule unitaire correspondant appartenant à un bloc-moule identique inférieur, caractérisé en ce que ladite paroi latérale (3) est perforée ou ajourée, et en ce que le plateau déflecteur plein (7) est individuel et de forme similaire à celle du fond (5 ; 20) mais d'une dimension légèrement supérieure.

2. Bloc-moule pour la fabrication de fromages selon la revendication 1, caractérisé en ce que le plateau déflecteur plein individuel (7) possède une face supérieure (9) et une face inférieure (10) avec des pentes opposées, partant d'un point central et s'étendant vers la périphérie de ce plateau déflecteur (7).

3. Bloc-moule pour la fabrication de fromages selon la revendication 2, caractérisé en ce que le plateau déflecteur plein individuel (7) est équipé, à sa périphérie, d'un dispositif de "goutte d'eau".

4. Bloc-moule pour la fabrication de fromages selon l'une quelconque des revendications 1 à 3, caractérisé en ce que, dans chaque moule unitaire (1), la partie supérieure avec paroi latérale (3) et fond (5) perforés ou ajourés, le plateau déflecteur plein (7) et la partie inférieure perforée ou ajourée (11) sont solidarisés de façon permanente, notamment par l'intermédiaire de plots (8,14) assemblés par soudure.

5. Bloc-moule pour la fabrication de fromages selon l'une quelconque des revendications 1 à 3, caractérisé en ce que chaque moule unitaire est formé de deux éléments séparés et superposables, avec un élément supérieur (1A) correspondant à la paroi latérale perforée ou ajourée (3) de ce moule unitaire, et un élément inférieur (1B) comprenant le fond ajouré ou perforé précité (20), le plateau déflecteur plein (7) et la partie perforée ou ajourée (11) symétrique dudit fond (20), des moyens d'assemblage (19) étant prévus pour réunir une pluralité d'éléments supérieurs (1A), et d'autres moyens d'assemblage (23) étant prévus pour réunir plusieurs éléments inférieurs (1B) correspondants.

6. Moule unitaire utilisable dans un bloc-moule pour la fabrication de fromages selon l'une quelconque des revendications 1 à 5, ou éventuellement utilisable individuellement, comprenant une partie supérieure avec une paroi latérale (3) perforée ou ajourée et un fond (5 ; 20), caractérisé en ce que le fond (5; 20) est perforé ou ajouré sur sensiblement toute son étendue, en ce que la partie supérieure surmonte un plateau déflecteur plein (7) de forme similaire à celle du fond (5 ; 20) mais d'une dimension légèrement supérieure, et en ce que le plateau déflecteur plein (7) surmonte lui-même une partie inférieure (11) symétrique du fond précité (5 ; 20) et perforée ou ajourée sur sensiblement toute son étendue, dont le bord (12) est prévu pour s'emboîter au sommet (18) de la partie supérieure d'un moule unitaire (1 ; 1A, 1B) identique disposé au-dessous.

## Claims

1. Mould block for the manufacturing of cheeses, particularly for moulding and dewatering operations in the manufacture of soft cheeses and/or blue cheeses and/or pressed chesses, this mould block being formed by the assembly of unit moulds in a horizontal plane and itself being stackable with identical mould blocks in order to form a stack which can be turned over, each unit mould (1; 1A, 1B) comprises a top part with a lateral wall (3) and a base (5; 20) perforated or pierced over substantially its entire extent, the top part surmounting a solid deflector plate (7), the solid deflector plate (7) itself surmounting a bottom part (11) symmetrical with the aforementioned base (5; 20) and perforated or pierced over substantially its entire extent, the edge (12) of which is designed to nest in the top (18) of the top part of the corresponding unit mould belonging to the identical bottom mould block, characterised in that the said lateral wall (3) is perforated or pierced, and in that the solid deflector plate (7) is individual and of a shape similar to that of the base (5; 20) but of slightly larger dimensions.

2. Mould block for the manufacturing of cheeses according to Claim 1, characterised in that the individual solid deflector plate (7) has a top face (9) and a bottom face (10) with opposite slopes, starting from a central point and extending towards the periphery of this deflector plate (7).

3. Mould block for the manufacturing of cheeses according to Claim 2, characterised in that the individual solid deflector plate (7) is equipped, at its periphery, with a "water drip" device.

4. Mould block for the manufacturing of cheeses according to any one of Claims 1 to 3, characterised in that, in each unit mould (1), the top part with lateral wall (3) and base (5) perforated or pierced, the solid deflector plate (7) and the perforated or pierced bottom part (11) are permanently fixed together, notably by means of studs (8, 14) assembled by welding.

5. Mould block for the manufacturing of cheeses according to any one of Claims 1 to 3, characterised in that each unit mould is formed by two separate elements which can be placed one on top of the other, with a top element (1A) corresponding to the perforated or pierced lateral wall (3) of this unit mould, and a bottom element (1B) comprising the aforementioned pierced or perforated base (20), the solid deflector plate (7) and the perforated or pierced part (11) symmetrical with the said base (20), assembly means (19) being provided to connect a plurality of top elements (1A), and other assembly means (23) being provided to connect several corresponding bottom elements (1B).

6. Unit mould which can be used in a mould block for the manufacturing of cheeses according to any one of claims 1 to 5, or which can optionally be used individually, comprising a top part with a perforated or pierced lateral wall (3) and a base (5; 20), characterised in that the base (5; 20) is perforated or pierced over substantially its entire extent, in that the top part surmounts a solid deflector plate (7) of a shape similar to that of the base (5; 20) but of slightly larger dimensions, and in that the solid deflector plate (7) itself surmounts a bottom part (11) symmetrical with the aforementioned base (5; 20) and perforated or pierced over substantially its entire extent, the edge (12) of which is designed to nest in the top (18) of the top part of an identical unit mould (1; 1A, 1B) disposed underneath.

## Patentansprüche

1. Formblock zur Herstellung von Käsen, insbesondere für die Formgebung und das Abtropfen bei der Herstellung von Weich- und/oder Petersilie- und/oder Preßkäsen, wobei der Formblock durch Zusammenbau von Einheitsformen in einer horizontalen Ebene gebildet ist und seinerseits wiederum mit identischen Formblöcken stapelbar ist, um einen umkehrbaren Stapel zu bilden, und wobei jede Einheitsform (1; 1A, 1B) einen oberen Teil mit einer Seitenwand (3) und einem im wesentlichen über seine gesamte Ausdehnung gelochten oder durchbrochenen Boden (5; 20) aufweist, wobei der obere Teil sich über einem vollen Ablenkungsboden (7) erstreckt, der sich wiederum über einem unteren Teil (11) erstreckt, der zu dem zuvor genannten Boden (5; 20) symmetrisch und im wesentlichen über seine gesamte Ausdehnung gelocht oder durchbrochen ist und dessen Rand (12) an der Oberkante (18) des oberen Teils der entsprechenden Einheitsform hineinpaßt, die zu einer unteren identischen Einheitsform gehört, dadurch gekennzeichnet, daß die Seitenwand (3) gelocht oder durchbrochen ist und daß der volle Ablenkungsboden (7) vereinzelt ist und eine zu der des Bodens (5; 20) ähnliche Form, jedoch mit geringfügig größerer Abmessung hat.

2. Formblock zur Herstellung von Käsen nach Anspruch 1, dadurch gekennzeichnet, daß der vereinzelte volle Ablenkungsboden (7) eine obere Fläche (9) und eine untere Fläche (10) mit entgegengesetzten Neigungen besitzt, die von einem mittigen Punkt ausgehen und sich zum Rand des Ablenkungsbodens (7) erstrecken.

3. Formblock zur Herstellung von Käsen nach Anspruch 2, dadurch gekennzeichnet, daß der vereinzelte volle Ablenkungsboden (7) an seinem Rand eine _{"}Wassertropfen"-Vorrichtung aufweist.

4. Formblock zur Herstellung von Käsen nach einem der Ansprüche 1 bis 3 , dadurch gekennzeichnet, daß in jeder Einheitsform (1) der obere Teil mit Seitenwand (3) und Boden (5), die beide gelocht oder durchbrochen sind, der volle Ablenkungsboden (7) und der gelochte oder durchbrochene untere Teil (11) dauerhaft, insbesondere über miteinander verschweißte Stifte (8, 14), miteinander verbunden sind.

5. Formblock zur Herstellung von Käsen nach einem der Ansprüche 1 bis 3, dadurch gekennzeichnet, daß jede Einheitsform aus zwei getrennten und überlagerbaren Elementen besteht, wobei ein oberes Element (1A) der gelochten oder durchbrochenen Seitenwand (3) der Einheitsform entspricht und ein unteres Element (1B) den zuvor genannten durchbrochenen oder gelochten Boden (20), den vollen Ablenkungsboden (7) und den zu dem Boden (20) symmetrischen, gelochten oder durchbrochenen Teil (11) aufweist, wobei Verbindungseinrichtungen (19) vorgesehen sind, uni eine Vielzahl oberer Elemente (1A) zu vereinigen, und andere/weitere Verbindungseinrichtungen (23) vorgesehen sind, um mehrere entsprechende untere Elemente (1B) zu vereinigen.

6. Einheitsform zur Verwendung in einem Formblock für die Herstellung von Käsen nach einem der Ansprüche 1 bis 5 oder ggf. zur alleinigen Verwendung, welche einen oberen Teil mit einer gelochten oder durchbrochenen Seitenwand (3) und einem Boden (5; 20) aufweist, dadurch gekennzeichnet, daß der Boden (5; 20) im wesentlichen über seine gesamte Ausdehnung gelocht oder durchbrochen ist, daß sich der obere Teil über einem vollen Ablenkungsboden (7) erstreckt und eine zu der des Bodens (5; 20) ähnliche Form, jedoch mit geringfügig größerer Abmessung hat, und daß sich der volle Ablenkungsboden (7) wiederum über einem unteren Teil (11) erstrecht, der zu dem zuvor genannten Boden (5; 20) symmetrisch und im wesentlichen über seine gesamte Ausdehnung gelocht oder durchbrochen ist und dessen Rand (12) an der Oberkante (18) des oberen Teils einer identischen Einheitsform (1; 1A, 1B) hineinpaßt, die darunter angeordnet ist.
